# EUROPEAN PATENT APPLICATION

(11) **EP 4 328 263 A1**
(43) Date of publication of application: **28.02.2024**
(21) Application number: 22893226.5
(22) Date of filing: 10.11.2022
(51) Int. Cl.: C08K 5/57, C08K 5/5419, C08K 5/544, C08K 5/00, C08K 5/14, C08K 5/23

(54) **CROSSLINKING AID COMPOSITION FOR OLEFIN-BASED COPOLYMER, CROSSLINKING AGENT COMPOSITION, AND ADDITIVE FOR OPTICAL DEVICE ENCAPSULANT COMPOSITION**

(30) Priority: 10.11.2021 KR 20210154113
(71) Applicant: LG Chem, Ltd., Yeongdeungpo-gu Seoul 07336 (KR)
(72) Inventor: LEE, Jin Kuk, Daejeon 34122 (KR); LEE, Eun Jung, Daejeon 34122 (KR); PARK, Sang Eun, Daejeon 34122 (KR); LEE, Young Woo, Daejeon 34122 (KR); HAN, Sang Wook, Daejeon 34122 (KR)
(74) Representative: Hoffmann Eitle
(86) International application number: PCT/KR2022/017654
(87) International publication number: WO 2023/085807

(57) **Abstract**

The present invention relates to a crosslinking auxiliary composition for an olefin-based copolymer, a crosslinking agent, and an additive for an encapsulant composition for an optical device, and by preparing an encapsulant composition for an optical device using them, an encapsulant composition for an optical device and an encapsulant film for an optical device, having high volume resistance and light transmittance could be obtained.

## Description

### TECHNICAL FIELD

This application claims the benefit of Korean Patent Application No. 10-2021-0154113, filed on November 10, 2021, in the Korean Intellectual Property Office, the contents of which are incorporated herein by reference.

The present invention relates to a crosslinking auxiliary composition and a crosslinking composition for an olefin-based copolymer, and an additive for an encapsulant composition for an optical device.

### BACKGROUND ART

As global environmental problems, energy problems, etc. get worse and worse, solar cells receive attention as a clean energy generating means without fear of exhaustion. If solar cells are used outside such as the roof of a building, generally, a module type is used. In order to obtain a crystalline solar cell module when manufacturing a solar cell module, protection sheet for solar cell module (surface side transparent protection member)/solar cell encapsulant/crystalline solar cell device crystalline solar cell device/solar cell encapsulant/protection sheet for solar cell module (back side protection member) are stacked in order. Meanwhile, in order to manufacture a thin film-based solar cell module, thin film-type solar cell device/solar cell encapsulant/protection sheet for solar cell module (back side protection member) are stacked in order.

As the solar cell encapsulant, generally, an ethylene/vinyl acetate copolymer or an ethylene/alpha-olefin copolymer, etc. is used. In addition, in the solar cell encapsulant, a light stabilizer is generally included as an additive considering the requirement on climate-resistance for a long time. In addition, considering the adhesiveness of a transparent surface side protection member or a back side protection member represented by glass, a silane coupling agent is commonly included in the solar cell encapsulant.

Particularly, an ethylene/vinyl acetate copolymer (EVA) sheet has been widely used, because transparency, flexibility and adhesiveness are excellent. An ethylene-vinyl acetate copolymer (EVA) film has been widely used, because transparency, flexibility and adhesiveness are excellent. However, if an EVA composition is used as the constituent material of a solar cell encapsulant, it has been apprehended that components such as an acetic acid gas generated by the decomposition of EVA might influence a solar cell device.

An ethylene/alpha-olefin copolymer has no problems of a resin on hydrolysis and may solve the problems of deteriorating lifetime or reliability. However, since the ethylene/alpha-olefin copolymer does not include a polar group in the resin, miscibility with a polar crosslinking auxiliary agent included as the constituent material of the conventional solar cell encapsulant, has been deteriorated, it took a long time for soaking, and there were problems with productivity.

As described above, the development of a crosslinking auxiliary agent that could improve the productivity of a solar cell encapsulant including an ethylene/alpha-olefin copolymer which could be usefully utilized as a material having excellent volume resistance and requiring high insulation, such as a solar cell encapsulant, is still required.

### [Prior Art Document]

### [Patent Document]

(Patent Document 1) Korean Laid-open Patent No. 2018-0063669

### DETAILED DESCRIPTION OF THE INVENTION

### TECHNICAL PROBLEM

A task to solve in the present invention is to provide a crosslinking auxiliary composition for an olefin-based copolymer, comprising a crosslinking auxiliary agent having excellent miscibility with an olefin-based copolymer.

Another task to solve in the present invention is to provide a crosslinking composition for an olefin-based copolymer, used for the crosslinking of an olefin-based copolymer.

Another task to solve in the present invention is to provide an additive for an encapsulant composition for an optical device.

### TECHNICAL SOLUTION

To solve the above tasks, the present invention provides a crosslinking auxiliary composition and a crosslinking composition for an olefin-based copolymer, and an encapsulant composition for an optical device.
[1] The present invention provides a crosslinking auxiliary composition for an olefin-based copolymer, the composition comprising a compound represented by Formula 1. 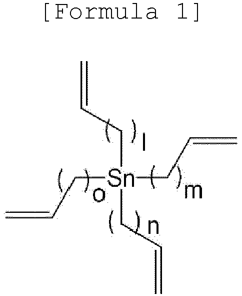 In Formula 1, l, m, n, and o are each independently an integer of 0 to 4.
[2] The present invention provides the crosslinking auxiliary composition for an olefin-based copolymer according to [1], wherein, in Formula 1, m, n, and o are each independently an integer of 0 to 2.
[3] The present invention provides the crosslinking auxiliary composition for an olefin-based copolymer according to [1] or [2], wherein the compound of Formula 1 is tetravinyltin.
[4] The present invention provides the crosslinking auxiliary composition for an olefin-based copolymer according to any one among [1] to [3], wherein the crosslinking auxiliary composition for an olefin-based copolymer further comprises a crosslinking auxiliary agent containing at least one or more unsaturated groups.
[5] The present invention provides the crosslinking auxiliary composition for an olefin-based copolymer according to [4], wherein a weight ratio of the compound of Formula 1 and the crosslinking auxiliary agent containing at least one or more unsaturated groups is 20:80 to 80:20.
[6] The present invention provides the crosslinking auxiliary composition for an olefin-based copolymer according to [4] or [5], wherein the crosslinking auxiliary agent containing at least one or more unsaturated groups comprises one or more selected from the group consisting of triallyl isocyanurate (TAIC), triallyl cyanurate, diallyl phthalate, diallyl fumarate, diallyl maleate, ethylene glycol diacrylate, ethylene glycol dimethacrylate, and trimethylolpropane trimethacrylate.
[7] In addition, the present invention provides a crosslinking composition for an olefin-based copolymer, the composition comprising: a crosslinking agent; a silane coupling agent; and a compound of Formula 1. 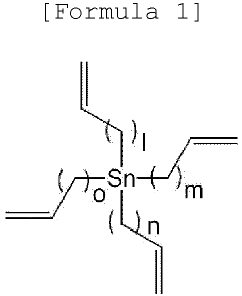 In Formula 1, l, m, n, and o are each independently an integer of 0 to 4.
[8] The present invention provides the crosslinking composition for an olefin-based copolymer according to [7], wherein the crosslinking agent is one or two or more selected from the group consisting of an organic peroxide, a hydroperoxide and an azo compound.
[9] The present invention provides the crosslinking composition for an olefin-based copolymer according to [7] or [8], wherein the crosslinking agent is one or more selected from the group consisting of t-butylcumylperoxide, di-t-butyl peroxide, di-cumyl peroxide, 2,5-dimethyl-2,5-di(t-butylperoxy)hexane, 2,5-dimethyl-2,5-di(t-butylperoxy)-3-hexyne, cumene hydroperoxide, diisopropyl benzene hydroperoxide, 2,5-dimethyl-2,5-di(hydroperoxy)hexane, t-butyl hydroperoxide, bis-3,5,5-trimethylhexanoyl peroxide, octanoyl peroxide, benzoyl peroxide, o-methylbenzoyl peroxide, 2,4-dichlorobenzoyl peroxide, t-butylperoxy isobutyrate, t-butylperoxy acetate, t-butylperoxy-2-ethylhexylcarbonate (TBEC), t-butylperoxy-2-ethylhexanoate, t-butylperoxy pyvalate, t-butylperoxy octoate, t-butylperoxyisopropyl carbonate, t-butylperoxybenzoate, di-t-butylperoxyphthalate, 2,5-dimethyl-2,5-di(benzoylperoxy)hexane, 2,5-dimethyl-2,5-di(benzoylperoxy)-3-hexyne, methyl ethyl ketone peroxide, cyclohexanone peroxide azobisisobutyronitrile and azobis(2,4-dimethylvaleronitrile).
[10] The present invention provides the crosslinking composition for an olefin-based copolymer according to any one among [7] to [9], wherein the silane coupling agent is one or more selected from the group consisting of N-(β-aminoethyl)-γ-aminopropyltrimethoxysilane, N-(β-aminoethyl)-γ-aminopropylmethyldimethoxysilane, γ-aminopropyltriethoxysilane, γ-glycidoxypropyltrimethoxysilane, γ-methacryloxypropyltrimethoxysilane (MEMO), vinyltrimethoxysilane, vinyltriethoxysilane, 3-methacryloxypropyl methyldimethoxysilane, 3-methacryloxypropyl methyldiethoxysilane, 3-methacryloxypropyl triethoxysilane, and p-styryl trimethoxysilane.
[11] In addition, the present invention provides an additive for an encapsulant composition for an optical device, the additive comprising a compound of Formula 1. 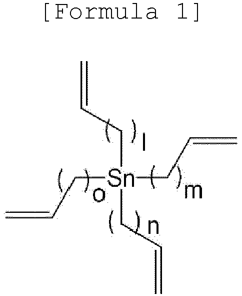 In Formula 1, l, m, n, and o are each independently an integer of 0 to 4.

### ADVANTAGEOUS EFFECTS

A crosslinking auxiliary composition and a crosslinking composition for an olefin-based copolymer, and an additive for an encapsulant composition for an optical device of the present invention, include a compound containing tin, having excellent miscibility with an olefin-based copolymer, and show rapid soaking with respect to an olefin-based copolymer, and an encapsulant composition for an optical device, prepared by using them shows excellent volume resistance and light transmittance so as to be widely used for various uses in electrical and electronic industrial fields.

### MODE FOR CARRYING OUT THE INVENTION

Hereinafter, the present invention will be described in more detail to assist the understanding of the present invention.

It will be understood that words or terms used in the present disclosure and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

### [Crosslinking auxiliary composition for olefin-based copolymer]

The crosslinking auxiliary composition for an olefin-based copolymer is characterized in comprising a compound represented by Formula 1.

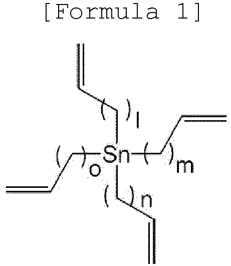

In Formula 1, l, m, n, and o are each independently an integer of 0 to 4.

In addition, in Formula 1, l, m, n, and o are each independently an integer of 0 to 2.

In addition, the crosslinking auxiliary composition for an olefin-based copolymer according to an embodiment of the present invention may particularly include tetravinyltin as the compound of Formula 1.

The compound of Formula 1 included in the crosslinking auxiliary composition for an olefin-based copolymer of the present invention may be included as a crosslinking auxiliary agent in the crosslinking auxiliary composition for an olefin-based copolymer, and the compound of Formula 1 shows excellent miscibility with respect to an olefin-based copolymer to show rapid soaking time. In addition, in case where the crosslinking auxiliary composition for an olefin-based copolymer of the present invention, including the compound of Formula 1 is applied as a crosslinking auxiliary agent in an encapsulant composition for an optical device including an olefin-based copolymer, the encapsulant composition for an optical device may show a high degree of crosslinking, volume resistance and light transmittance.

In addition, the crosslinking auxiliary composition for an olefin-based copolymer may additionally include a crosslinking auxiliary agent in addition to the compound of Formula 1.

As the crosslinking auxiliary agent, various crosslinking auxiliary agents well-known in this technical field may be used and may include, for example, a compound containing at least one or more unsaturated groups such as an allyl group and a (meth)acryloxy group.

As the crosslinking auxiliary agent containing at least one or more unsaturated groups may include, for example, a polyallyl compound such as triallyl isocyanurate (TAIC), triallyl cyanurate, diallyl phthalate, diallyl fumarate and diallyl maleate, and the compound containing the (meth)acryloxy group may include, for example, a poly(meth)acryloxy compound such as ethylene glycol diacrylate, ethylene glycol dimethacrylate, and trimethylolpropane trimethacrylate, without specific limitation.

If the crosslinking auxiliary composition for an olefin-based copolymer according to an embodiment of the present invention additionally includes the crosslinking auxiliary agent containing at least one or more unsaturated groups in addition to the compound of Formula 1, a weight ratio of the compound of Formula 1 and the additional crosslinking auxiliary agent may be 20:80 to 80:20, particularly, 21:79 to 79:21, 22:78 to 78:22, 23:77 to 77:23, 24:76 to 76:24, 25:75 to 75:25.

If the crosslinking auxiliary composition for an olefin-based copolymer according to an embodiment of the present invention additionally includes the crosslinking auxiliary agent containing at least one or more unsaturated groups in addition to the compound of Formula 1, and if applied in an encapsulant composition for an optical device, the high volume resistance, rapid soaking rate, and excellent light transmittance and adhesiveness of the encapsulant composition for an optical device may be satisfied, and an even higher degree of crosslinking may be achieved in contrast to a case of using only the compound of Formula 1. In case of including the compound of Formula 1 together with the crosslinking auxiliary agent, and increasing the ratio of the crosslinking auxiliary agent against the compound of Formula 1, the light transmittance may increase in contrast to a case of using the same amount of the crosslinking auxiliary agent. If the ratio of the crosslinking auxiliary agent is reduced, a soaking rate, volume resistance and the degree of crosslinking may increase. Accordingly, the ratio may be suitably determined in the above-described range according to the physical properties desired to show.

The crosslinking auxiliary composition for an olefin-based copolymer according to an embodiment of the present invention may be used in 0.1 to 9 parts by weight based on 80 to 99 parts by weight of an olefin-based copolymer. The crosslinking auxiliary composition for an olefin-based copolymer may particularly be used based on 80 to 99 parts by weight of the olefin-based copolymer in 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, or 1 part by weight or more to 9 parts by weight or less, 8 parts by weight or less, 7 parts by weight or less, 6 parts by weight or less, 5 parts by weight or less, 4 parts by weight or less, or 3 parts by weight or less. If the amount used of the crosslinking auxiliary composition with respect to the olefin-based copolymer is too small, crosslinking reaction is difficult to occur, and if the amount used of the crosslinking auxiliary composition is too large, the volume resistance of an encapsulant for an optical device may be reduced. If the crosslinking auxiliary composition is used in a suitable ratio with respect to the olefin-based copolymer, the crosslinking reaction of an encapsulant composition for an optical device may suitably occur so as to form an encapsulant for an optical device, and to show high volume resistance of the encapsulant for an optical device thus formed.

The olefin-based copolymer to which the crosslinking auxiliary composition for an olefin-based copolymer could be applied, may satisfy (a) a density of 0.85 to 0.90 g/cc, and (b) a melt index of 0.1 to 100 g/10 min.

The (a) density of the olefin-based copolymer may particularly be 0.850 g/cc or more, 0.855 g/cc or more, 0.860 g/cc or more, 0.865 g/cc or more, or 0.870 g/cc or more to 0.900 g/cc or less, 0.895 g/cc or less, 0.890 g/cc or less, 0.885 g/cc or less, 0.880 g/cc or less, 0.875 g/cc or less, or 0.870 g/cc or less. If the density of the olefin-based copolymer is too high, the light transmittance of an encapsulant for an optical device manufactured by using an encapsulant composition for an optical device using the same may be reduced due to the crystal phase included in the olefin-based copolymer, but if the olefin-based copolymer satisfies the above-described density range, high light transmittance may be shown.

The (b) melt index of the olefin-based copolymer may be 0.1 g/10 min or more, 0.5 g/10 min or more, 1.0 g/10 min or more, 1.5 g/10 min or more, 2.0 g/10 min or more, 2.5 g/10 min or more, 5.0 g/10 min or more, or 10.0 g/10 min or more to 100 g/10 min or less, 95 g/10 min or less, 90 g/10 min or less, 85 g/10 min or less, 80 g/10 min or less, 75 g/10 min or less, 70 g/10 min or less, 60 g/10 min or less, or 50 g/10 min or less. If the melt index of the olefin-based copolymer is deviated from the above-described range and too low or too high, there may be problems in that the moldability of the encapsulant composition for an optical device may become poor, and stable extrusion may become difficult. However, if the olefin-based copolymer satisfies the above melt index range, the moldability of the encapsulant composition for an optical device may be excellent, and an encapsulant for an optical device, and an encapsulant sheet for an optical device could be extruded stably.

The olefin-based copolymer to which the crosslinking auxiliary composition for an olefin-based copolymer according to an embodiment of the present invention is applied, may particularly be an ethylene/alpha-olefin copolymer.

Generally, the density of the ethylene/alpha-olefin copolymer may be influenced by the type and amount of a monomer used during polymerization, the degree of polymerization, or the like, and in the case of a copolymer, the influence by the amount of a comonomer is large. With the increase of the amount of the comonomer, an ethylene/alpha-olefin copolymer having a low density may be prepared, and the amount of the comonomer introducible in the copolymer may be dependent on the intrinsic copolymerization properties of a catalyst.

The ethylene/alpha-olefin copolymer to which the crosslinking auxiliary composition for an olefin-based copolymer according to an embodiment of the present invention is applied, may show a low density and excellent processability as described above.

The ethylene/alpha-olefin copolymer is prepared by copolymerizing ethylene and an alpha-olefin-based monomer, and in this case, the alpha-olefin which means a moiety derived from an alpha-olefin-based monomer in the copolymer may be C4 to C20 alpha-olefin, particularly, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicosene, etc., and any one among them or mixtures of two or more thereof may be used.

Among them, the alpha-olefin may be 1-butene, 1-hexene or 1-octene, preferably, 1-butene, 1-hexene, or a combination thereof.

In addition, in the ethylene/alpha-olefin copolymer, the alpha-olefin content may be suitably selected in the range satisfying the physical conditions, particularly, greater than 0 to 99 mol%, or 10 to 50 mol%, without limitation.

In addition, the olefin-based copolymer may be an ethylene alpha-olefin copolymer having a volume resistance of 1.0 × 10¹⁵ Ω·cm or more, particularly, 3.0 × 10¹⁵ Ω·cm or more, 5.0 × 10¹⁵ Ω·cm, 7.0 × 10¹⁵ Ω·cm or more, 1.0 × 10¹⁶ Ω·cm or more, 3.0 × 10¹⁶ Ω·cm or more, or 5.0 × 10¹⁶ Ω·cm or more. If the volume resistance of the olefin-based copolymer is too low, the volume resistance after crosslinking of the encapsulant composition for an optical device may not reach a suitable level, but if the volume resistance of the olefin-based copolymer satisfies the above value, the encapsulant composition for an optical device may show excellent volume resistance after crosslinking. The upper limit of the volume resistance of the olefin-based copolymer is not specifically limited, but could be, considering the volume resistance commonly shown by an olefin-based copolymer and the difficulty in the preparation of an olefin-based copolymer having high volume resistance, 9.9 × 10¹⁶ Ω·cm or less, 9.0 × 10¹⁶ Ω·cm or less, 7.0 × 10¹⁶ Ω·cm or less, 5.0 × 10¹⁶ Ω·cm or less, 3.0 × 10¹⁶ Ω·cm or less, 2.5 × 10¹⁶ Ω·cm or less, or 2.0 × 10¹⁶ Ω·cm or less.

### [Crosslinking composition for olefin-based copolymer]

In addition, the present invention provides a crosslinking composition for an olefin-based copolymer.

The crosslinking composition for an olefin-based copolymer of the present invention may particularly comprise: a crosslinking agent; a silane coupling agent; and a compound of Formula 1.

A crosslinking composition for an olefin-based copolymer comprising:
a crosslinking agent;
a silane coupling agent; and
a compound of the following Formula 1: 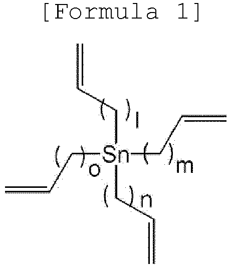
in Formula 1, l, m, n, and o are each independently an integer of 0 to 4.

The crosslinking composition for an olefin-based copolymer may include the above-described crosslinking auxiliary composition for an olefin-based copolymer according to an embodiment of the present invention, and includes a crosslinking agent and a silane coupling agent together.

The crosslinking agent may use various crosslinking agents well-known in this technical field as long as it is a crosslinking compound capable of initiating radical polymerization or forming crosslinking bonds, for example, one or two or more selected from the group consisting of an organic peroxide, a hydroxyl peroxide and an azo compound.

In addition, in an embodiment of the present invention, the crosslinking agent may particularly be an organic peroxide.

The organic peroxide may be an organic peroxide having a one-hour half-life temperature of 120 to 135°C, for example, 120 to 130°C, 120 to 125°C, preferably, 121°C. The "one-hour half-life temperature" means a temperature at which the half-life of the crosslinking agent becomes one hour. According to the one-hour half-life temperature, the temperature at which radical initiation reaction is efficiently performed may become different. Therefore, in case of using the organic peroxide having the one-hour half-life temperature in the above-described range, radical initiation reaction, that is, crosslinking reaction in a lamination process temperature for manufacturing an optical device may be effectively performed.

The crosslinking agent may include one or more selected from the group consisting of dialkyl peroxides such as t-butylcumylperoxide, di-t-butyl peroxide, di-cumyl peroxide, 2,5-dimethyl-2,5-di(t-butylperoxy)hexane, and 2,5-dimethyl-2,5-di(t-butylperoxy)-3-hexyne; hydroperoxides such as cumene hydroperoxide, diisopropyl benzene hydroperoxide, 2,5-dimethyl-2,5-di(hydroperoxy)hexane, and t-butyl hydroperoxide; diacyl peroxides such as bis-3,5,5-trimethylhexanoyl peroxide, octanoyl peroxide, benzoyl peroxide, o-methylbenzoyl peroxide, and 2,4-dichlorobenzoyl peroxide; peroxy esters such as t-butylperoxy isobutyrate, t-butylperoxy acetate, t-butylperoxy-2-ethylhexylcarbonate (TBEC), t-butylperoxy-2-ethylhexanoate, t-butylperoxy pyvalate, t-butylperoxy octoate, t-butylperoxyisopropyl carbonate, t-butylperoxybenzoate, di-t-butylperoxyphthalate, 2,5-dimethyl-2,5-di(benzoylperoxy)hexane, and 2,5-dimethyl-2,5-di(benzoylperoxy)-3-hexyne; ketone peroxides such as methyl ethyl ketone peroxide and cyclohexanone peroxide, lauryl peroxide, and azo compounds such as azobisisobutyronitrile and azobis(2,4-dimethylvaleronitrile), may be used, without limitation.

The silane coupling agent may use, for example, one or more selected from the group consisting of N-(β-aminoethyl)-γ-aminopropyltrimethoxysilane, N-(β-aminoethyl)-γ-aminopropylmethyldimethoxysilane, γ-aminopropyltriethoxysilane, γ-glycidoxypropyltrimethoxysilane, γ-methacryloxypropyltrimethoxysilane (MEMO), vinyltrimethoxysilane, vinyltriethoxysilane, 3-methacryloxypropyl methyldimethoxysilane, 3-methacryloxypropyl methyldiethoxysilane, 3-methacryloxypropyl triethoxysilane, and p-styryl trimethoxysilane.

The compound of Formula 1 included in the crosslinking composition for an olefin-based copolymer is the same as described in the crosslinking auxiliary composition for an olefin-based copolymer, and the contents on the added crosslinking auxiliary agent are also the same. That is, the crosslinking composition for an olefin-based copolymer may include the crosslinking auxiliary composition for an olefin-based copolymer.

The crosslinking composition for an olefin-based copolymer may include the crosslinking agent in 1 to 90 parts by weight, the silane coupling agent in 0.1 to 20 parts by weight, and the compound of Formula 1 in 1 to 90 parts by weight. The amount of each component may mean the relative ratio among the weights of the components included in the crosslinking composition for an olefin-based copolymer.

The crosslinking agent may be included in the crosslinking composition for an olefin-based copolymer in 1 to 90 parts by weight, particularly, 1 part by weight or more, 2 parts by weight or more, 3 parts by weight or more, 4 parts by weight or more, 5 parts by weight or more, 6 parts by weight or more, 7 parts by weight or more, 8 parts by weight or more, or 10 parts by weight or more to 90 parts by weight or less, 80 parts by weight or less, 70 parts by weight or less, 60 parts by weight or less, 50 parts by weight or less, 40 parts by weight or less, or 30 parts by weight or less. If the amount included of the crosslinking agent is too small, crosslinking reaction may be difficult to occur in case of using the olefin-based copolymer, and if the amount included of the crosslinking agent is too large, the volume resistance of an encapsulant for an optical device manufactured by using the olefin-based copolymer could be reduced. If the crosslinking agent is included in the crosslinking composition for an olefin-based copolymer in the above-described range, an encapsulant composition for an optical device using the same may undergo suitable crosslinking reaction so that an encapsulant for an optical device may be prepared, and the encapsulant for an optical device thus prepared may show high volume resistance.

The silane coupling agent may be included in the crosslinking composition for an olefin-based copolymer in 0.1 to 20 parts by weight, particularly, 0.1 parts by weight or more, 0.2 parts by weight or more, 0.5 parts by weight or more, 0.7 parts by weight or more, 0.9 parts by weight or more, 1.0 part by weight or more, or 1.5 parts by weight or more to 20 parts by weight or less, 18 parts by weight or less, 17 parts by weight or less, 15 parts by weight or less, 12 parts by weight or less, 10 part by weight or less, 8 parts by weight or less, 7 parts by weight or less, 5 parts by weight or less, or 4 parts by weight or less. If the amount included of the silane coupling agent is too small, in case of using the olefin-based copolymer, adhesiveness of an encapsulant composition for an optical device with respect to a substrate, for example, a glass substrate may be low, and it is difficult to show suitable performance as the encapsulant for an optical device, and if the amount included of the silane coupling agent is too excessive, the volume resistance of an encapsulant for an optical device may be reduced unsuitably. If the silane coupling agent is included in the crosslinking composition for an olefin-based copolymer in the above-described range, an encapsulant composition for an optical device using the same shows excellent adhesiveness with respect to the substrate of an optical device or a glass substrate where an optical device is placed, and moisture penetration, or the like may be effectively blocked, excellent performance of the optical device may be maintained for a long time, and the encapsulant for an optical device may show high volume resistance.

The compound of Formula 1 may be included in the crosslinking composition for an olefin-based copolymer in 1 to 9 parts by weight, particularly, 1 part by weight or more, 2 parts by weight or more, 3 parts by weight or more, 4 parts by weight or more, 5 parts by weight or more, 6 parts by weight or more, 7 parts by weight or more, 8 parts by weight or more, or 10 parts by weight or more to 90 parts by weight or less, 80 parts by weight or less, 70 parts by weight or less, 60 parts by weight or less, 50 parts by weight or less, 40 parts by weight or less, or 30 parts by weight or less.

The crosslinking composition for an olefin-based copolymer according to an embodiment of the present invention may be used in 0.21 to 20 parts by weight based on 80 to 99 parts by weight of an olefin-based copolymer. The crosslinking composition for an olefin-based copolymer may particularly be used based on 80 to 99 parts by weight of an olefin-based copolymer, in 0.21 parts by weight or more, 0.25 parts by weight or more, 0.30 parts by weight or more, 0.40 parts by weight or more, 0.50 parts by weight or more, 0.60 parts by weight or more, 0.70 parts by weight or more, 0.80 parts by weight or more, or 1.0 part by weight or more to 20 parts by weight or less, 19 parts by weight or less, 18 parts by weight or less, 17 parts by weight or less, 16.5 parts by weight or less, 16 parts by weight or less, or 15 parts by weight or less. If the amount included of the crosslinking composition with respect to the olefin-based copolymer is too small, crosslinking reaction may hardly occur, and if the amount included of the crosslinking composition is too large, the volume resistance of an encapsulant for an optical device may be reduced. If the crosslinking composition is included in the olefin-based copolymer in the above-described ratio, an encapsulant composition for an optical device using the same may undergo suitable crosslinking reaction so that an encapsulant for an optical device may be prepared, and the encapsulant for an optical device thus manufactured may show high volume resistance.

An encapsulant composition for an optical device in which the crosslinking auxiliary composition for an olefin-based copolymer or the additive for an encapsulant composition for an optical device according to an embodiment of the present invention is applied, may have increased volume resistance after crosslinking, and an increment may particularly be 1.5 times or more, 1.6 times or more, 1.65 times or more, 1.7 times or more, or 1.8 times or more, and 200 times or less, or 100 times or less.

In addition, an encapsulant composition for an optical device in which the crosslinking auxiliary composition for an olefin-based copolymer or the additive for an encapsulant composition for an optical device according to an embodiment of the present invention is applied, may show excellent light transmittance after crosslinking, particularly, 92.0% or more, particularly, 92.1% or more or 92.2% or more in a wavelength range of 380 nm to 1100 nm.

### [Additive for encapsulant composition for optical device]

In addition, the present invention provides an additive for an encapsulant composition for an optical device, including the compound of Formula 1.

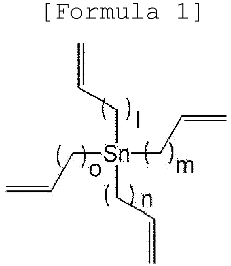

In Formula 1, l, m, n, and o are each independently an integer of 0 to 4.

The explanation on the compound of Formula 1 is the same as that on the compound of Formula 1 included in the crosslinking auxiliary composition for an olefin-based copolymer and the crosslinking composition for an olefin-based copolymer.

The additive for an encapsulant composition for an optical device according to an embodiment of the present invention may be used in 0.1 to 9 parts by weight based on 80 to 99 parts by weight of an olefin-based copolymer. The additive for an encapsulant composition for an optical device may particularly be used based on 80 to 99 parts by weight of the olefin-based copolymer, in 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, or 1 part by weight or more to 9 parts by weight or less, 8 parts by weight or less, 7 parts by weight or less, 6 parts by weight or less, 5 parts by weight or less, 4 parts by weight or less, or 3 parts by weight or less. If the amount used of the additive for an encapsulant composition for an optical device is too small with respect to the olefin-based copolymer, crosslinking reaction may hardly occur, and if the amount used of the additive for an encapsulant composition for an optical device is too large, the volume resistance of an encapsulant for an optical device may be reduced. If the additive for an encapsulant composition for an optical device is used in the above-described ratio with respect to the olefin-based copolymer, an encapsulant composition for an optical device may undergo suitable crosslinking reaction to be formed into an encapsulant for an optical device, and the encapsulant for an optical device thus formed may show high volume resistance.

In case of using the crosslinking auxiliary composition for an olefin-based copolymer, the crosslinking composition for an olefin-based copolymer, and the additive for an encapsulant composition for an optical device in an encapsulant composition for an optical device, an olefin-based copolymer may be used together, and the olefin-based copolymer may particularly be included based on 100 parts by weight of the encapsulant composition for an optical device in 80 to 99 parts by weight, particularly, 80 parts by weight or more, 82 parts by weight or more, 85 parts by weight or more, 86 parts by weight or more, 87 parts by weight or more, or 88 parts by weight or more to 99 parts by weight or less, 98 parts by weight or less, 97 parts by weight or less, 96 parts by weight or less, or 95 parts by weight or less. If the amount included of the olefin-based copolymer in the encapsulant composition for an optical device is too small, suitable mechanical properties such as tear resistance and tear strength may be difficult to show. If the olefin-based copolymer is included in the encapsulant composition for an optical device in the above-described range, suitable mechanical properties as an encapsulant for an optical device may be shown.

In addition, the additive for an encapsulant composition for an optical device may additionally include one or more selected from a light stabilizer, a UV absorbent and a thermal stabilizer as necessary.

The light stabilizer may capture the active species of the photothermal initiation of a resin to prevent photooxidation according to the use of the composition applied. The type of the light stabilizer used is not specifically limited, and for example, known compounds such as a hindered amine-based compound and a hindered piperidine-based compound may be used.

According to the use, the UV absorbent may absorb ultraviolet rays from the sunlight, etc., transform into harmless thermal energy in a molecule, and play the role of preventing the excitation of the active species of photothermal initiation in the resin composition. Particular types of the UV absorbent used are not specifically limited, and for example, one or a mixture of two or more of benzophenone-based, benzotriazole-based, acrylnitrile-based, metal complex-based, hindered amine-based, inorganic including ultrafine particulate titanium oxide and ultrafine particulate zinc oxide UV absorbents, etc. may be used.

In addition, the thermal stabilizer may include a phosphor-based thermal stabilizer such as tris(2,4-di-tert-butylphenyl)phosphite, phosphorous acid, bis[2,4-bis(1,1-dimethylethyl)-6-methylphenyl]ethylester, tetrakis(2,4-di-tert-butylphenyl)[1,1-biphenyl]-4,4'-diylbisphosphonate and bis(2,4-di-tert-butylphenyl)pentaerythritol diphosphite; and a lactone-based thermal stabilizer such as the reaction product of 8-hydroxy-5,7-di-tert-butyl-furan-2-on and o-xylene, and one or two or more of them may be used.

The amounts of the light stabilizer, UV absorbent and/or thermal stabilizer are not specifically limited. That is, the amounts of the additives may be suitably selected considering the use of the resin composition, the shape or density of the additives, etc. Generally, the amounts may be suitably controlled in a range of 0.01 to 5 parts by weight based on 100 parts by weight of the total solid content of the encapsulant composition for an optical device.

In addition, the encapsulant composition for an optical device may suitably and additionally include various additives well-known in this art according to the use of the resin component applied in addition to the above components.

In addition, the encapsulant composition for an optical device may be utilized in various molded articles by molding by injection, extrusion, etc. Particularly, the composition may be used in various optoelectronic devices, for example, as an encapsulant for the encapsulation of a device in a solar cell, and may be used as an industrial material applied in a lamination process with heating, etc., without limitation.

### Examples

Hereinafter, the present invention will be explained in more detail referring to embodiments. However, the embodiments are provided only for illustration, and the scope of the present invention is not limited thereto.

### Example 1

0.5 parts by weight of triallyl isocyanurate (TAIC) and 0.125 parts by weight of tetravinyltin (TVT) were used as crosslinking auxiliary agents.

### Examples 2 to 4

Crosslinking auxiliary agents were prepared as in Example 1, except for changing the amounts of triallyl isocyanurate (TAIC) and tetravinyltin (TVT) as in Table 1.

### Example 5

0.625 parts by weight of tetravinyltin (TVT) was used as a crosslinking auxiliary agent.

### Examples 6 and 7

Crosslinking auxiliary agents were prepared as in Example 5, except for changing the amount of tetravinyltin (TVT) as in Table 1.

### Comparative Example 1

0.5 parts by weight of triallyl isocyanurate (TAIC) was used as a crosslinking auxiliary agent.

### Comparative Example 2

0.5 parts by weight of tetravinylsilane (TVS) was used as a crosslinking auxiliary agent.

### Comparative Example 3

1.0 part by weight of triallyl isocyanurate (TAIC) was used as a crosslinking auxiliary agent.

**[Table 1]**

| | Resin type | Crossli nking agent (phr) | Silane couplin g agent (phr) | Crosslinking auxiliary agent | | |
|---|---|---|---|---|---|---|
| | | | | TAIC (phr) | TVT (phr) | TVS (phr) |
| Example 1 | Preparation Example 1 | 1 | 0.2 | 0.5 | 0.125 | - |
| Example 2 | Preparation Example 1 | 1 | 0.2 | 0.5 | 0.250 | - |
| Example 3 | Preparation Example 1 | 1 | 0.2 | 0.5 | 0.500 | - |
| Example 4 | Preparation Example 1 | 1 | 0.2 | 0.5 | 1.000 | - |
| Example 5 | Preparation Example 1 | 1 | 0.2 | - | 0.625 | - |
| Example 6 | Preparation Example 1 | 1 | 0.2 | - | 1.000 | - |
| Example 7 | Preparation Example 1 | 1 | 0.2 | - | 1.500 | - |
| Comparative Example 1 | Preparation Example 1 | 1 | 0.2 | 0.5 | - | - |
| Comparative Example 2 | Preparation Example 1 | 1 | 0.2 | - | - | 0.5 |
| Comparative Example 3 | Preparation Example 1 | 1 | 0.2 | 1.0 | - | - |

### Example 1A

500 g of LUCENE^{™} LF675 of LG Chem, which is an ethylene/1-butene copolymer was dried using a convention oven of 40°C overnight. The density of the LUCENE^{™} LF675, measured by ASTM D1505 was 0.877 g/cm², and the melt index (190°C, 2.16 kg) measured by ASTM D1238 was 14.0 g/10 min. The bowl temperature of a viscometer (Thermo Electron (Karsruhe) GmbH, Haake Modular Torque Viscometer) was set to 40°C. An ethylene/alpha-olefin copolymer was added to the bowl, and 1 part per hundred rubber (phr) of t-butyl 1-(2-ethylhexyl) monoperoxycarbonate (TBEC, Sigma Aldrich Co.) as a crosslinking agent, 0.625 phr of the crosslinking auxiliary agent prepared in Example as a crosslinking auxiliary agent, and 0.2 phr of methacryloxypropyltrimethoxysilane (MEMO, Shinetsu Co.) as a silane coupling agent were added, using an electronic pipette. While stirring in 40 rpm, the change of a torque value in accordance with time was observed, and soaking was terminated when the torque value increased rapidly.

After that, by using a soaking completed specimen, an encapsulant film of a sheet shape was formed by press molding into an average thickness of 0.5 mm at a low temperature (under conditions of 90 to 100°C of an extruder barrel temperature) at which high-temperature crosslinking was not achieved, using a microextruder.

### Examples 2A to 7A

The same process as in Example 1A was performed except for using Examples 2 to 7, respectively, instead of Example 1 as the crosslinking auxiliary agent.

### Comparative Examples 1A to 3A

The same process as in Example 1A was performed except for using the crosslinking auxiliary agents of Comparative Examples 1 to 3, respectively, instead of the crosslinking auxiliary agent of Example 1.

### Experimental Examples

### (1) Soaking rate

In each of Examples 1A to 7A and Comparative Example 2A, first soaking (pre-soaking) termination time before aging and second soaking termination time after aging were measured, and time consumed for soaking was calculated and shown in Table 2. In addition, in each of Comparative Examples 1A and 3A, soaking termination time was measured, and time consumed for soaking was calculated and shown in Table 2.

### (2) Volume resistance

With respect to each of the ethylene/alpha olefin copolymers used in Examples 1A to 7A and Comparative Examples 1A to 3A, the volume resistance was measured while applying a voltage of 1000 V for 600 seconds using an Agilent 4339B Highresistance meter (product of Agilent Technologies K.K.) under temperature conditions of 23 ± 1°C and humidity conditions of 50 ± 3%.

In addition, by using each soaked resin manufactured in Examples 1A to 7A and Comparative Examples 1A to 3A, a specimen in a sheet shape was formed by press molding into an average thickness of 0.5 mm at a low temperature (under conditions of 90 to 100°C of an extruder barrel temperature) at which high-temperature crosslinking was not achieved, using a microextruder. After that, the specimen was crosslinked at 150°C for 20 minutes. With respect to each crosslinked specimen, the volume resistance was measured while applying a voltage of 1000 V for 600 seconds using an Agilent 4339B Highresistance meter (product of Agilent Technologies K.K.) under temperature conditions of 23 ± 1°C and humidity conditions of 50 ± 3%.

### (3) Light transmittance

Light transmittance at 200 nm to 1,000 nm was measured using Shimadzu UV-3600 spectrophotometer to obtain a light transmittance curve, and the values of 280 nm to 380 nm and the values of 380 nm to 1100 nm were confirmed.
- Measurement mode: transmittance
- Wavelength interval: 1 nm
- Measurement rate: medium

### (4) Measurement of yellow index

With respect to the crosslinked specimen manufactured in (2) Measurement of volume resistance above, a yellow index was measured according to ASTM E313.

**[Table 2]**

| | First soaki ng rate | Second soaking rate | | Volume resistan ce of ethylene /alpha olefin copolyme r (Ω·cm) | Volume resistan ce after crosslin king (Ω·cm) | Light transmittanc e (%) | | YI |
|---|---|---|---|---|---|---|---|---|
| | (min) | Soaki ng compl etion time (min) | Completion time shortening ratio against Comparative Example 1 | | | After cross linki ng (280-380 nm) | After crossl inking (380-1100 nm) | |
| Example 1A | <1 | 57 | 3% | 4.60×10¹⁶ | 8.70×10¹⁶ | 88.2 | 92.3 | 3.2 |
| Example 2A | <1 | 56 | 5% | 4. 40×10¹⁶ | 1.90×10¹⁷ | 88.0 | 92.4 | 3.1 |
| Example 3A | <1 | 53 | 10% | 3. 90×10¹⁶ | 5. 80×10¹⁷ | 87.8 | 92.3 | 3.3 |
| Example 4A | <1 | 51 | 14% | 4.60×1016 | 2.00×10¹⁸ | 87.8 | 92.3 | 3.1 |
| Example 5A | <1 | 5 | 91% | 3. 60×10¹⁶ | 7.10×10¹⁷ | 88.0 | 92.2 | 3.3 |
| Example 6A | <2 | 7 | 88% | 5.20×10¹⁶ | 1.04×10¹⁸ | 87.5 | 92.2 | 3.2 |
| Example 7A | <2 | 11 | 81% | 3.10×10¹⁶ | 8.30×10¹⁷ | 86.5 | 92.2 | 3.1 |
| Comparative Example 1A | - | 59 | - | 5.00×10¹⁶ | 2.30×10¹⁶ | 87.9 | 92.3 | 3.2 |
| Comparative Example 2A | <2 | 3 | 95% | 4.80×10¹⁶ | 5.50×10¹⁶ | 87.8 | 91.9 | 3.1 |
| Comparative Example 3A | - | 142 | - | 4.10×10¹⁶ | 6.65×10¹⁶ | 87.8 | 92.0 | 3.1 |

As confirmed in Table 2, in cases of using the crosslinking auxiliary compositions of Examples 1 to 7, it could be confirmed that the soaking completion time of a crosslinking agent could be reduced, and the volume resistance of an olefin-based copolymer composition after crosslinking could be markedly improved when compared to the cases of using triallyl isocyanurate as a crosslinking auxiliary agent as in Comparative Examples 1 and 3. In addition, in cases of using the crosslinking auxiliary compositions of Examples 1 to 7, it could be confirmed that the volume resistance of olefin-based copolymer compositions after crosslinking could be markedly improved, and high light transmittance could be shown after crosslinking when compared to a case of using tetravinylsilane as a crosslinking auxiliary agent as in Comparative Example 2. In a case of using tetravinylsilane as a crosslinking auxiliary agent as in Comparative Example 2, the shortening effects of the soaking completion time of a crosslinking agent was excellent, but the improving effects of the volume resistance of an olefin-based copolymer composition after crosslinking was insufficient, and light transmittance after crosslinking was insufficient when compared to Examples 1 to 7.

## Claims

1. A crosslinking auxiliary composition for an olefin-based copolymer, the composition comprising a compound represented by the following Formula 1: 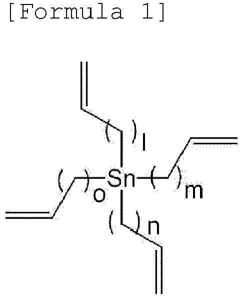 in Formula 1, l, m, n, and o are each independently an integer of 0 to 4.

2. The crosslinking auxiliary composition for an olefin-based copolymer according to claim 1, wherein, in Formula 1, m, n, and o are each independently an integer of 0 to 2.

3. The crosslinking auxiliary composition for an olefin-based copolymer according to claim 1, wherein the compound of Formula 1 is tetravinyltin.

4. The crosslinking auxiliary composition for an olefin-based copolymer according to claim 1, wherein the crosslinking auxiliary composition for an olefin-based copolymer further comprises a crosslinking auxiliary agent containing at least one or more unsaturated groups.

5. The crosslinking auxiliary composition for an olefin-based copolymer according to claim 4, wherein a weight ratio of the compound of Formula 1 and the crosslinking auxiliary agent containing at least one or more unsaturated groups is 20:80 to 80:20.

6. The crosslinking auxiliary composition for an olefin-based copolymer according to claim 4, wherein the crosslinking auxiliary agent containing at least one or more unsaturated groups comprises one or more selected from the group consisting of triallyl isocyanurate (TAIC), triallyl cyanurate, diallyl phthalate, diallyl fumarate, diallyl maleate, ethylene glycol diacrylate, ethylene glycol dimethacrylate, and trimethylolpropane trimethacrylate.

7. A crosslinking composition for an olefin-based copolymer, the composition comprising:
a crosslinking agent;
a silane coupling agent; and
a compound of the following Formula 1: 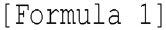 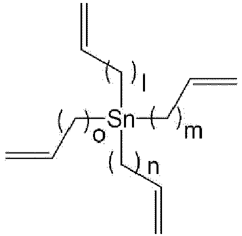
in Formula 1, l, m, n, and o are each independently an integer of 0 to 4.

8. The crosslinking composition for an olefin-based copolymer according to claim 7, wherein the crosslinking agent is one or two or more selected from the group consisting of an organic peroxide, a hydroperoxide and an azo compound.

9. The crosslinking composition for an olefin-based copolymer according to claim 7, wherein the crosslinking agent is one or more selected from the group consisting of t-butylcumylperoxide, di-t-butyl peroxide, di-cumyl peroxide, 2,5-dimethyl-2,5-di(t-butylperoxy)hexane, 2,5-dimethyl-2,5-di(t-butylperoxy)-3-hexyne, cumene hydroperoxide, diisopropyl benzene hydroperoxide, 2,5-dimethyl-2,5-di(hydroperoxy)hexane, t-butyl hydroperoxide, bis-3,5,5-trimethylhexanoyl peroxide, octanoyl peroxide, benzoyl peroxide, o-methylbenzoyl peroxide, 2,4-dichlorobenzoyl peroxide, t-butylperoxy isobutyrate, t-butylperoxy acetate, t-butylperoxy-2-ethylhexylcarbonate (TBEC), t-butylperoxy-2-ethylhexanoate, t-butylperoxy pyvalate, t-butylperoxy octoate, t-butylperoxyisopropyl carbonate, t-butylperoxybenzoate, di-t-butylperoxyphthalate, 2,5-dimethyl-2,5-di(benzoylperoxy)hexane, 2,5-dimethyl-2,5-di(benzoylperoxy)-3-hexyne, methyl ethyl ketone peroxide, cyclohexanone peroxide azobisisobutyronitrile and azobis(2,4-dimethylvaleronitrile).

10. The crosslinking composition for an olefin-based copolymer according to claim 7, wherein the silane coupling agent is one or more selected from the group consisting of N-(β-aminoethyl)-γ-aminopropyltrimethoxysilane, N-(β-aminoethyl)-γ-aminopropylmethyldimethoxysilane, γ-aminopropyltriethoxysilane, γ-glycidoxypropyltrimethoxysilane, γ-methacryloxypropyltrimethoxysilane (MEMO), vinyltrimethoxysilane, vinyltriethoxysilane, 3-methacryloxypropyl methyldimethoxysilane, 3-methacryloxypropyl methyldiethoxysilane, 3-methacryloxypropyl triethoxysilane, and p-styryl trimethoxysilane.

11. An additive for an encapsulant composition for an optical device, comprising a compound of the following Formula 1: 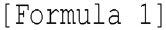 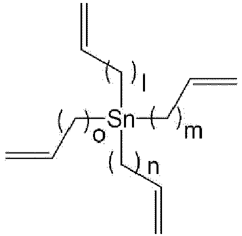 in Formula 1, l, m, n, and o are each independently an integer of 0 to 4.
